# EUROPÄISCHE PATENTSCHRIFT

(11) **EP 2 332 759 B1**
(45) Veröffentlichungstag und Bekanntmachung des Hinweises auf die Patenterteilung: **19.09.2012**
(21) Anmeldenummer: 10014132.4
(22) Anmeldetag: 29.10.2010
(51) Int. Cl.: B60J 5/06, E05F 7/00

(54) **Fahrzeug mit einer Schiebetüre**
Vehicle with a sliding door
Véhicule doté d'une porte coulissante

(30) Priorität: 07.12.2009 DE 102009057309
(43) Veröffentlichungstag der Anmeldung: 15.06.2011
(73) Patentinhaber: DURA Automotive Body and Glass Systems GmbH, 58840 Plettenberg (DE)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- DE-B3-102008 016 650
- FR-A1- 2 924 150
- US-A- 5 398 988
- US-B1- 6 206 455

## Beschreibung

Die Erfindung betrifft ein Fahrzeug, insbesondere ein Kraftfahrzeug, mit einer Karosserie, einer Schiebetüre und einer Zentrierung, die mit einem Gegenlager lösbar verbindbar ist.

Die Schiebetüre umfaßt eine Führungsschiene und einen Gleitschlitten, der an der Führungsschiene längsverschieblich gelagert ist und der durch ein Mehrgelenk mit der Karosserie verbunden ist. Die Zentrierung kann an der Schiebetüre vorgesehen sein. In diesem Fall ist die Zentrierung mit einem an der Karosserie vorgesehen Gegenlager lösbar verbindbar. Es ist allerdings auch möglich, daß die Zentrierung an der Karosserie vorgesehen ist. In diesem Fall ist die Zentrierung mit einem an der Schiebetüre vorgesehenen Gegenlager lösbar verbindbar.

Eine Schiebetüre der eingangs angegebenen Art ist aus der DE 10 2008 016 650 B3 bekannt. Bei dieser Schiebetüre umfaßt das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist. Die vorbekannte Schiebetüre umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Mehrgelenk abgewandten Ende durch eine Zentrierung drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsstift vorgesehen, der in einer an der Schiebetüre vorgesehenen Führungsbahn geführt ist. Die Führungsbahn verläuft relativ zur Führungsschiene geneigt. Hierbei verläuft die Führungsbahn in Richtung von dem Scharnierbügel weg nach außen geneigt.

Eine andere Schiebetüre der eingangs angegebenen Art ist in der EP 2 008 846 A2 beschrieben, auf die ebenfalls ausdrücklich Bezug genommen wird. Hier ist eine Antriebstange vorhanden, die an dem Steuerhebel drehbar gelagert ist. Die Schiebetüre ist an dem dem Mehrgelenk abgewandten Ende durch eine Zentrierung drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An dem Zwischenhebel ist ein Führungsstift vorgesehen, der in einer an der Schiebetüre vorgesehenen Führungsbahn geführt ist.

Die US 6,206,455 B offenbart ein Fahrzeug mit einer Schiebetüre, die an Führungen in der Karosserie verschieblich gelagert ist. An einer Säule des Kraftfahrzeugs sind Stabilisatoren vorhanden, die zur Aufnahme von dornenförmigen Zentrierungen dienen und die Gegenlager im Dachbereich und im Schwellerbereich der Karosserie bilden.

Aus der US 5,398,988 A ist ein Kraftfahrzeug mit einer vorderen Schwenktüre und einer hinteren Schiebetüre bekannt, zwischen denen keine B-Säule vorhanden ist. Die Befestigungssäule für das vordere Ende der hinteren Schiebetüre wird vom hinteren Ende der vorderen Schwenktüre gebildet.

Aufgabe der Erfindung ist es, eine verbesserte Schiebetüre der eingangs angegebenen Art vorzuschlagen.

Erfindungsgemäß wird diese Aufgabe durch die Merkmale des Anspruchs 1 gelöst. Diese Lösung ist dadurch gekennzeichnet, daß ein jeweils Gegenlager und/oder eine Zentrierung im Dachbereich und im Schwellerbereich der Karosserie vorgesehen sind. Hierdurch kann die Stabilität des Fahrzeugs in der geschlossenen Stellung der Schiebetüre verbessert werden.

Erfindungsgemäß weist die Karosserie an dem dem Mehrgelenk abgewandten Teil der Schiebetüre keine Säule auf. Wenn die Schiebetüre beispielsweise als hintere Türe in einem Kraftfahrzeug verwendet wird, wenn das Mehrgelenk im Bereich der C-Säule vorgesehen ist und wenn die Schiebetüre nach hinten zu öffnen ist, kann es vorteilhaft sein, wenn bei der Karosserie keine B-Säule vorhanden ist.

Die Schiebetüre wird dann in der geschlossenen Stellung durch die Gegenlager und Zentrierungen im Dachbereich und im Schwellerbereich festgehalten. Durch das Fehlen der Säule der Karosserie an dem dem Mehrgelenk abgewandten Ende der Schiebetüre, also insbesondere durch das Fehlen der B-Säule, kann die Zugangsöffnung zu dem Fahrzeug wesentlich vergrößert werden. Insbesondere können dann Rollstühle oder Ähnliches leichter oder überhaupt in das Fahrzeug gebracht oder aus dem Fahrzeug herausgebracht werden. Gleichwohl ist es möglich, eine Schiebetüre der eingangs angegebenen Art zu verwenden.

Vorteilhafte Weiterbildungen sind in den Unteransprüchen beschrieben.

Sowohl im Dachbereich wie auch im Schwellerbereich sind jeweils ein Gegenlager und eine Zentrierung vorhanden. Dabei ist es möglich, daß beide Gegenlager an der Karosserie und beide Zentrierungen an der Schiebetüre vorgesehen sind. Es ist allerdings auch möglich, beide Gegenlager an der Schiebetüre und beide Zentrierungen an der Karosserie vorzusehen. Schließlich ist es möglich, eines der beiden Gegenlager an der Karosserie und das andere Gegenlager an der Schiebetüre vorzusehen. Die Zentrierungen befinden sich dann jeweils an dem anderen Teil.

In bestimmten Fällen ist es vorteilhaft, wenn ein Gegenlager im Dachbereich der Karosserie und ein Gegenlager im Schwellerbereich der Karosserie vorgesehen ist.

Nach einer weiteren vorteilhaften Weiterbildung weisen eines oder beide Gegenlager eine Führungsbahn für die Zentrierung auf. Die Zentrierung wird in der jeweiligen Führunsbahn geführt. Die Führungsbahn kann als Führungskanal ausgebildet sein.

Eine weitere vorteilhafte Weiterbildung ist dadurch gekennzeichnet, daß die Zentrierung oder die Zentrierungen einen Zentrierdorn aufweist. Der Zentrierdorn kann einen kreisförmigen Querschnitt aufweisen.

Vorteilhaft ist es, wenn die Verlaufskurve des Gegenlagers von der Verlaufskurve der Zentrierung abweicht. Hierdurch kann eine Verspannung der Schiebetüre erzeugt werden.

Eine weitere Vorteilhafte Weiterbildung ist **dadurch gekennzeichnet, daß** der Endpunkt der Verlaufskurve des Gegenlagers mit dem Endpunkt der Verlaufskurve der Zentrierung übereinstimmt. An dem Endpunkt der Verlaufskurven wird dann keine Verspannung der Schiebetüre erzeugt. Durch die in der Umgebung des Endpunktes bestehende Abweichung der Verlaufskurven wird bei Verlassen des Endpunktes eine Verspannung der Schiebetüre erzeugt, die die Schiebetüre an dem Endpunkt festhält. Diese Verspannung erzeugt einen Widerstand gegen eine Öffnung der Schiebetüre. Hierdurch kann eine stabile Lage der Schiebetüre an ihrem Endpunkt erreicht werden.

Ein Ausführungsbeispiel der Erfindung wird nachstehend anhand der beigefügten Zeichnung im einzelnen erläutert. In der Zeichnung zeigt
- Fig. 1: eine vorbekannte Schiebetüre für ein Kraftfahrzeug in der ge- schlossenen Stellung in einer schematischen Ansicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 4: einen Teil einer Karosserie und eine Schiebetüre in einer perspek- tivischen Ansicht und
- Fig. 5: ein Gegenlager und eine Zentrierung des Kraftfahrzeugs gemäß Fig. 4 in einer schematischen Ansicht von oben.

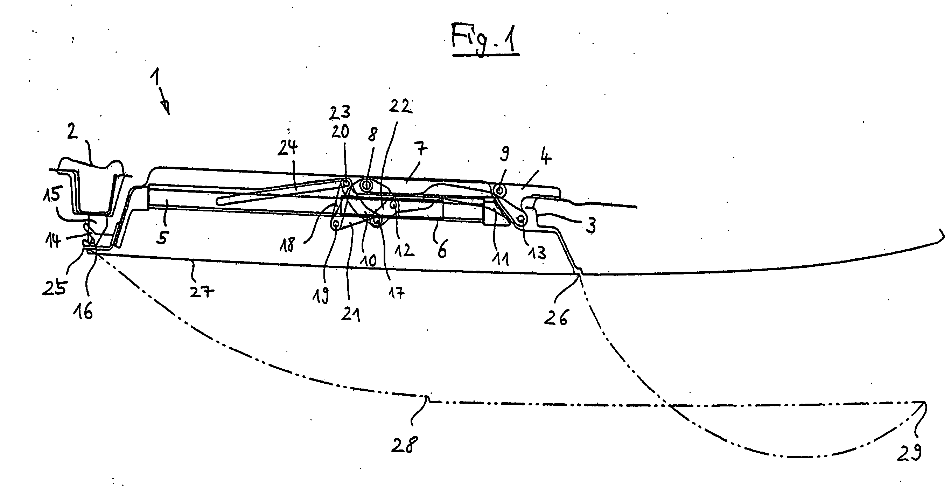

Fig. 1, 2 und 3 zeigen die Schiebetüre 1 nach einem Ausführungsbeispiel der DE 10 2008 016 650 B3. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Steuerhebel 11 ist ein erster Zwischenhebel 10 drehbar gelagert, und zwar um die Achse eines Gelenks 17. An dem Gleitschlitten 6 ist ein zweiter Zwischenhebel 18 drehbar gelagert, und zwar um die Achse eines Gelenks 19. Das Gelenk 19 liegt im äußeren Bereich des Gleitschlittens 6. Es liegt im Bereich des vorderen Endes des Gleitschlittens 6. Die von den Gelenken 17, 19 abgewandten Enden der Zwischenhebel 10, 18 sind durch ein Gelenk 20 drehbar miteinander verbunden. Der erste Zwischenhebel 10 und der zweite Zwischenhebel 18 bilden einen Kniehebel. Da das Verbindungsgelenk 20 der Zwischenhebel 10, 18 in Bezug auf das Kraftfahrzeug weiter innen liegt als die Gelenke 17, 19, weist der von den Zwischenhebeln 10, 18 gebildete Kniehebel in Bezug auf das Kraftfahrzeug nach innen.

An dem Gleitschlitten 6 ist eine Gelenkplatte 21 befestigt, die die Gelenke 8, 12 und 19 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist eine Verlängerung 22 auf, die sich von dem Gelenk 12 nach außen erstreckt. Die Verlängerung 22 verlängert den Steuerhebel 11 längs der Verbindungslinie von dem Gelenk 13 zu dem Gelenk 12 über das Gelenk 12 hinaus. Dabei knickt die Verlängerung 22 gegenüber der Verbindungslinie zwischen den Gelenken 13 und 12, also der Längserstreckung des Steuerhebels 11, geringfügig nach außen bzw. hinten ab. An dem Steuerhebel 11 ist im Bereich des äußeren Endes der Verlängerung 22 das Gelenk 17 für den ersten Zwischenhebel 10 vorgesehen.

An dem Verbindungsgelenk 20 des ersten Zwischenhebels 10 und des zweiten Zwischenhebels 18 ist ein Führungsstift 23 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 23 befindet sich im Bereich des hinteren, inneren Endes der Führungsbahn 24. Der erste Zwischenhebel 10 weist von dem Gelenk 17 nach vorne und innen. Der zweite Zwischenhebel 18 weist von dem Gelenk 19 nach hinten und innen.

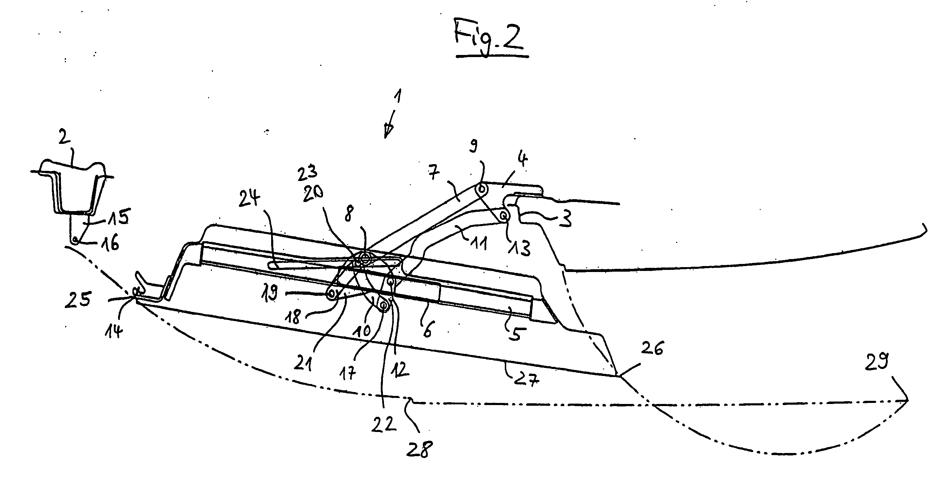

Im Verlauf der Öffnungsbewegung wird die Stellung nach Fig. 2 durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 23 könnte der Gleitschlitten 6 auf der Führungsschiene 5 frei verschoben werden. Der in der Führungsbahn 24 geführte Führungsstift 23 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf. Wenn die Führungsschiene 5 motorisch und/oder manuell relativ zum Gleitschlitten 6 nach hinten bewegt wird, bewegt sich der in der Führungsbahn 24 geführte Führungsstift 23 relativ zur Führungsschiene 5 und zum Gleitschlitten 6 nach außen, wodurch der zweite Zwischenhebel 18 im Uhrzeigersinn um das Gelenk 19 verschwenkt wird. Durch die Bewegung des Führungsstifts 23 relativ zum Gleitschlitten 6 nach hinten und außen wird das am anderen Ende des ersten Zwischenhebels 10 befindliche Gelenk 17 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 und/oder des ersten Zwischenhebels 10 und/oder des zweiten Zwischenhebels 18 um eines oder mehrere der Gelenke 9, 8, 13, 12, 17, 20, 19.

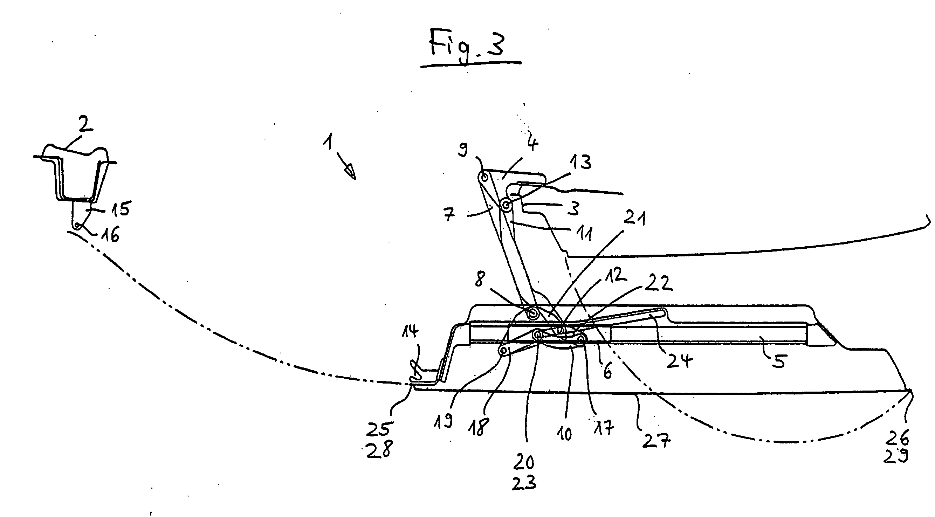

Die vollständig geöffnete Stellung der Schiebetüre 1 ist in Fig. 3 dargestellt. Der erste Zwischenhebel 10 wurde gegenüber der Verlängerung 22 um das Gelenk 17 um etwa 90° im Uhrzeigersinn verschwenkt. Der Führungsstift 23 hat das vordere, geschlossene Ende der Führungsbahn 24 erreicht. Der zweite Zwischenhebel 18 wurde gegenüber dem Gleitschlitten 6 bzw. der Gelenkplatte 21 um das Gelenk 19 um etwa 45° im Uhrzeigersinn verschwenkt. Der Öffnungswinkel der Zwischenhebel 10, 18 an dem Gelenk 20 wurde von etwa 30° auf etwa 150° vergrößert. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 23 übertragen und von dort über den ersten Zwischenhebel 10 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

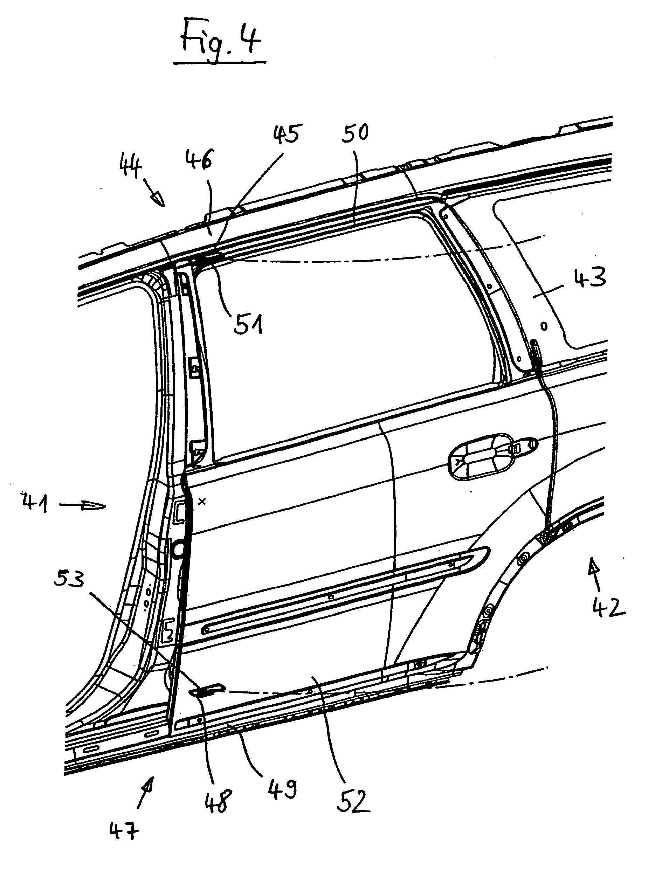

Fig. 4 zeigt eine Schiebetüre 41 und zugehörige Teile der Karosserie 42 eines erfindungsgemäßen Fahrzeugs, die anders als bei der Ausführungsform nach Fig. 1 bis 3 ausgebildet sind, in einer perspektivischen Darstellung. Das Mehrgelenk ist am hinteren Ende der Schiebetüre 41 vorgesehen. Es ist mit der C-Säule 43 der Karosserie 42 verbunden. An dem dem Mehrgelenk abgewandten Ende der Schiebetüre 41 ist im Dachbereich 44 ein Gegenlager 45 vorgesehen. Das Gegenlager 45 ist an einer Dachleiste 46 angebracht. Es befindet sich im unteren Bereich der Dachleiste 46.

Im Schwellerbereich 47 ist ein weiteres Gegenlager 48 vorgesehen. Das Gegenlager 48 ist an einem Bodenschweller 49 angeordnet. Es befindet sich im oberen Bereich des Bodenschwellers 49.

Die Schiebetüre 41 weist an ihrer oberen Abschlußleiste 50 eine Zentrierung 51 auf, die mit dem Gegenlager 45 zusammenwirkt. Ferner weist die Schiebetüre 41 an ihrem Bodenblech 52 eine Zentrierung 53 auf, die mit dem Gegenlager 48 zusammenwirkt. Die Zentrierungen 51, 53 befinden sich am vorderen Ende der Schiebetüre 41, also dem dem Mehrgelenk abgewandten Ende der Schiebetüre 41. Die Karosserie 42 weist keine B-Säule auf.

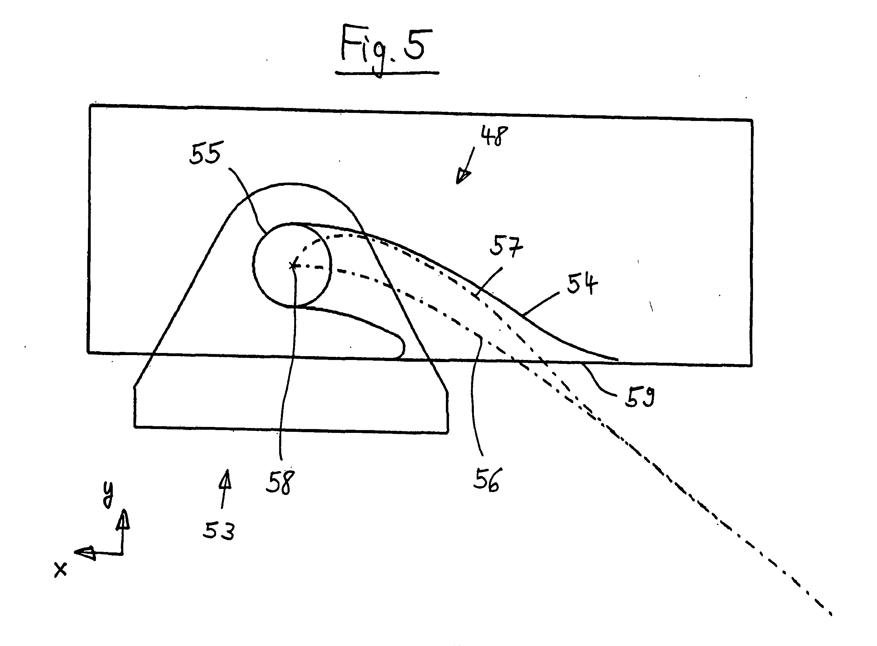

Fig. 5 zeigt das Gegenlager 48 und die Zentrierung 53 der Fig. 4 in einer vergrößerten, schematischen Darstellung von oben. Das Gegenlager 45 und die Zentrierung 51 sind in der selben Weise ausgebildet.

Das Gegenlager 48, das an dem Bodenschweller 49 der Karosserie 42 vorgesehen ist, umfaßt eine Führungsbahn 54, die als Führungskanal ausgebildet ist. Die Zentrierung 53, die an der Schiebetüre 41 vorgesehen ist, weist einen Zentrierdorn 55 auf. Der Zentrierdorn 55 hat einen kreisförmigen Querschnitt. Die Breite der Führungsbahn 54 entspricht im wesentlichen dem Durchmesser des Zentrierdorns 55.

Fig. 5 zeigt die Endlage des Zentrierdorns 55 in der Führungsbahn 54, die der Zentrierdorn 55 bei vollständig geschlossener Schiebetüre 41 einnimmt. Der Zentrierdorn 55 befindet sich dann am vorderen Ende der Führungsbahn 54.

Die Verlaufskurve der Führungsbahn 54 ist in Fig. 5 mit dem Bezugszeichen 56 versehen. Sie folgt der Mittellinie der Führungsbahn 54.

Die Verlaufskurve des Zentrierdorns 55 ist in Fig. 5 mit dem Bezugszeichen 57 versehen. Diese Verlaufskurve wird durch die Türmechanik bestimmt, also durch Lage und Abmessungen des Mehrgelenks, der Führungsschiene, des Gleitschlittens und des Zentrierdorns 55. Wenn der Zentrierdorn 55 nicht an die Führungsbahn 54 gebunden wäre, würde er bei der Bewegung der Schiebetüre 41 die Verlaufskurve 57 durchlaufen. Wie aus Fig. 5 ersichtlich weicht die Verlaufskurve 56 der Führungsbahn 54 des Gegenlagers 48 von der Verlaufskurve 57 des Zentrierdorns 55 der Zentrierung 53 ab.

Durch die Führungsbahn 54 wird der Zentrierdorn 55 in die Verlaufskurve 56 der Führungsbahn 54 gezwungen. Er wird in der Verlaufskurve 56 der Führungsbahn 54 zwangsgeführt. Hierdurch entsteht eine Verspannung, die zu einer entsprechenden Verformung der Schiebetüre 41 führt.

Wie ebenfalls aus Fig. 5 ersichtlich stimmt der Endpunkt 58 der Verlaufskurve 56 der Führungsbahn 54 des Gegenlagers 48 mit dem Endpunkt 58 der Verlaufskurve 57 des Zentrierdorns 55 der Zentrierung 53 überein. Der Endpunkt 58 entspricht dabei der Lage des Zentrierdorns 55 in der vollständig geschlossenen Stellung der Schiebetüre 41. In dieser vollständig geschlossenen Stellung ist die Schiebetüre 41 also nicht verspannt und nicht verformt.

Wenn die Schiebetüre aus ihrer vollständig geschlossenen Stellung heraus geöffnet werden soll, wird der Zentrierdorn 55 in der Führungsbahn 54 nach hinten bewegt. Da die Verlaufskurve 57 von der Verlaufskurve 56 abweicht, wird durch diese Bewegung eine Verspannung und damit Verformung der Schiebetüre 41 erzeugt. Der hierfür erforderliche Energieaufwand hält die Schiebetüre 41 stabil in ihrer vollständig geschlossenen Stellung. Er muß beim Öffnen der Schiebetüre 41 überwunden werden.

Beim Öffnen der Schiebetüre 41 durchläuft der Zentrierdorn 55 die Führungsbahn 54 nach hinten, bis er durch die Öffnung 59 der Führungsbahn 54 aus der Führungsbahn 54 heraustritt. Die Öffnung 59 der Führungsbahn 54 ist trichterförmig gestaltet. Beim Schließen der Schiebetüre wird der umgekehrte Weg durchlaufen. Durch die trichterförmige Ausgestaltung der Öffnung 59 ist gewährleistet, daß der Zentrierdorn 55 beim Schließen der Schiebetüre 41 zuverlässig in die Führungsbahn 54 eingeführt werden kann.

## Patentansprüche

1. Fahrzeug
mit einer Karosserie (42),
mit einer Schiebetüre (41), die eine Führungsschiene (5) und einen Gleitschlitten (6) umfaßt, der an der Führungsschiene (5) längsverschieblich gelagert ist und der durch ein Mehrgelenk (7, 11,4) mit der Karosserie (42) verbunden ist,
und mit mindestens einer Zentrierung (51, 53), die mit einem Gegenlager (45, 48) lösbar verbindbar ist,
**dadurch gekennzeichnet,**
**daß** jeweils ein Gegenlager (45, 48) und/oder eine Zentrierung (51, 53) im Dachbereich (46) und im Schwellerbereich (47) der Karosserie (42) vorgesehen sind
und **daß** die Karosserie (42) an dem dem Mehrgelenk (7, 11, 4) abgewandten Ende der Schiebetüre (41) keine Säule aufweist.

2. Fahrzeug nach Anspruch 1, **dadurch gekennzeichnet, daß** ein Gegenlager (45) im Dachbereich (46) der Karosserie (42) und ein Gegenlager (48) im Schwellerbereich (47) der Karosserie (42) vorgesehen ist.

3. Fahrzeug nach einem der vorhergehenden Ansprüche, **dadurch gekennzeichnet, daß** eines oder beide Gegenlager (45, 48) eine Führungsbahn (54) für die Zentrierung (51, 53) aufweisen.

4. Fahrzeug nach einem der vorhergehenden Ansprüche, **dadurch gekennzeichnet, daß** die Zentrierung (51, 53) oder die Zentrierungen (51, 53) einen Zentrierdorn (55) aufweisen.

5. Fahrzeug nach einem der vorhergehenden Ansprüche, **dadurch gekennzeichnet, daß** die Verlaufskurve (56) des Gegenlagers (45, 48) von der Verlaufskurve (57) der Zentrierung (51, 53) abweicht.

6. Fahrzeug nach einem der vorhergehenden Ansprüche, **dadurch gekennzeichnet, daß** der Endpunkt (58) der Verlaufskurve (56) des Gegenlagers (45, 48) mit dem Endpunkt (58) der Verlaufskurve (57) der Zentrierung (51, 53) übereinstimmt.

## Claims

1. A vehicle
with a body (42),
with a sliding door (41) which comprises a guide rail (5) and a sliding carriage (6) which is longitudinally movably mounted on the guide rail (5) and which is connected with the body (42) by a multiple joint (7, 11, 4),
and with at least one centering means (51, 53) which is releasably connectable with a counter bearing (45, 48),
**characterized in**
**that** a counter bearing (45, 48) and/or a centering means (51, 53) each are provided in the roof region (46) and in the sill region (47) of the body (42),
and **that** the body (42) has no pillar at the end of the sliding door (41) facing away from the multiple joint (7, 11, 4).

2. The vehicle according to claim 1, **characterized in that** one counter bearing (45) is provided in the roof region (46) of the body (42) and one counter bearing (48) is provided in the sill region (47) of the body (42).

3. The vehicle according to any of the preceding claims, **characterized in that** one or both counter bearings (45, 48) include a guideway (54) for the centering means (51, 53).

4. The vehicle according to any of the preceding claims, **characterized in that** the one or more centering means (51, 53) include a centering pin (55).

5. The vehicle according to any of the preceding claims, **characterized in that** the movement curve (56) of the counter bearing (45, 48) differs from the movement curve (57) of the centering means (51, 53).

6. The vehicle according to any of the preceding claims, **characterized in that** the end point (58) of the movement curve (56) of the counter bearing (45, 48) corresponds with the end point (58) of the movement curve (57) of the centering means (51, 53).

## Revendications

1. Véhicule
avec une carrosserie (42),
avec une porte coulissante (41) qui comprend un rail de guidage (5) et un chariot coulissant (6) qui est logé d'une manière déplaçable longitudinalement au rail de guidage (5) et qui est relié par une articulation multiple (7, 11, 4) à la carrosserie (42),
et avec au moins un centrage (51, 53) qui peut être relié amoviblement à un contre-palier (45, 48),
**caractérisé en ce qu'**à chaque fois un contre-palier (45, 48) et/ou un centrage (51, 53) sont prévus dans la zone de toit (46) et dans la zone de longeron (47) de la carrosserie (42),
et **en ce que** la carrosserie (42) ne présente pas de montant à l'extrémité de la porte coulissante (41) éloignée de l'articulation multiple (7, 11, 4).

2. Véhicule selon la revendication 1, **caractérisé en ce qu'**un contre-palier (45) est prévu dans la zone de toit (46) de la carrosserie (42), et un contre-palier (48) dans la zone de longeron (47) de la carrosserie (42).

3. Véhicule selon l'une des revendications précédentes, **caractérisé en ce qu'**un ou les deux contre-paliers (45, 48) présentent une voie de guidage (54) pour le centrage (51, 53).

4. Véhicule selon l'une des revendications précédentes, **caractérisé en ce que** le centrage (51, 53) ou les centrages (51, 53) présentent un mandrin de centrage (55).

5. Véhicule selon l'une des revendications précédentes, **caractérisé en ce que** la courbe d'extension (56) du contre-palier (45, 48) s'écarte de la courbe d'extension (57) du centrage (51, 53).

6. Véhicule selon l'une des revendications précédentes, **caractérisé en ce que** le point final (58) de la courbe d'extension (56) du contre-palier (45, 48) coïncide avec le point final (58) de la courbe d'extension (57) du centrage (51, 53).
